# EUROPÄISCHE PATENTSCHRIFT

(11) **EP 2 295 176 B1**
(45) Veröffentlichungstag und Bekanntmachung des Hinweises auf die Patenterteilung: **07.11.2018**
(21) Anmeldenummer: 09011695.5
(22) Anmeldetag: 12.09.2009
(51) Int. Cl.: B23B 31/16, B23B 31/28

(54) **Spannaggregat**
Tensioning assembly
Agrégat de serrage

(43) Veröffentlichungstag der Anmeldung: 16.03.2011
(73) Patentinhaber: Hiestand, Karl, 88630 Pfullendorf (DE)
(72) Erfinder: Hiestand, Karl, 88630 Pfullendorf (DE)
(74) Vertreter: Riebling, Peter

(56) Entgegenhaltungen:
- EP-A1- 0 272 394
- EP-A2- 0 234 230
- DE-A1- 3 709 246
- US-A- 4 573 379

## Beschreibung

Die Erfindung bezieht sich auf ein Spannaggregat für Werkzeugmaschinen mit einem mit einer Maschinenspindel drehfest verbindbaren Gehäuse und einem in diesem angeordneten Gewindetrieb, der mit einer mit einem Kraftspannfutter gekoppelten Zugstange zusammenwirkt und mittels dem dem Spannaggregat zugeleitete rotatorische Bewegungen in translatorische Verstellbewegungen der Zugstange umwandelbar sind.

Durch die DE 10 2007 044 309 A1 ist ein Elektrospanner, der ein Spannaggregat dieser Art aufweist, bekannt. Das umlaufende Gehäuse dient hierbei lediglich zur Abstützung eines Hohlrades eines Gleitkeilgetriebes, eine Übertragung der rotierenden Bewegung der Maschinenspindel auf ein Stellglied ist bei dieser Ausgestaltung nicht vorgesehen. Als Stellglied wirkt vielmehr ein Elektromotor auf einen Wellengenerator des Gleitkeilgetriebes ein, durch den über eine Stahlbuchse, die mit einer Außenverzahnung und einer Klauenkupplung versehen ist, der Rollgewindetrieb der Zugstange antreibbar ist. Die rotierenden Verstellbewegungen des über einen Riementrieb mit dem Antriebsrad des Keilwellengetriebes verbundenen Elektromotors können somit zwar in translatorische Verstellbewegungen der Zugstange umgewandelt werden, der Elektromotor ist aber jeweils in Abhängigkeit von der Drehzahl und Drehrichtung des Kraftspannfutters zu steuern, um Verstellbewegungen der Spannbacken auszulösen oder um die Spannkraft zu halten oder zu verändern. Dazu sind, um das Spannaggregat zusammen mit dem Stellmotor als Elektrospanner einsetzen zu können, eine außerordentlich aufwändige Steuereinrichtung sowie zahlreiche Programme erforderlich, in die eine Vielzahl von Parametern eingebunden werden müssen.

Abgesehen von dem sehr großen Steuerungsaufwand ist dadurch bedingt nicht nur eine hohe Störanfälligkeit gegeben, auch die Investitionskosten, insbesondere für die Steuereinrichtung und die verschiedenen Programme, sind erheblich. Vor allem aber ist von Nachteil, dass aufgrund der auf zahlreiche unterschiedliche Gegebenheiten einzustellende Steuerung sehr hohe Anforderungen an das Bedienungspersonal zu stellen sind. Dieser bekannte Elektrospanner ist daher in der Praxis nur bedingt eineinsetzbar.

Ein weiteres Spannaggregat, das die Merkmale des Oberbegriffs von Anspruch 1 zeigt, ist aus Dokument EP0 234 230 bekannt.

Aufgabe der Erfindung ist es demnach, ein Spannaggregat für Werkzeugmaschinen zur Übertragung und Umwandlung von Bewegungen zu schaffen, das in sehr vorteilhafter Weise bei elektrischen Spanneinrichtungen, um eine axial gerichtete, dem Kraftspannfutter zuzuleitende Spannkraft zu erzeugen, einsetzbar ist und das über einen langen Zeitraum eine stets sichere und störungsfreie Betriebsweise ermöglicht. Der konstruktive Aufbau soll hierbei einfach gestaltet sein, so dass auch eine wirtschaftliche Herstellung ermöglicht wird. Vor allem aber soll das Spannaggregat bei unterschiedlich ausgebildeten elektrischen Spanneinrichtungen eingesetzt werden können und es soll eine Einstellung der Spannkraft auch bei Umlauf der Maschinenspindel ermöglichen. Des Weiteren sollen zum Betrieb des Spannaggregates und des Stellgliedes keine aufwändigen Steuerungen und Programme benötigt werden. Gemäß der Erfindung wird dies bei einem Spannaggregat für Werkzeugmaschinen der eingangs genannten Gattung durch die Merkmalskombination von Anspruch 1 erreicht. Hierbei kann durch den Deckel die Hohlwelle in dem Gehäuse vorzugsweise mittels Wälzlager axial arretiert werden und der Deckel im Querschnitt T-förmig ausgebildet und durch den in das Gehäuse ragenden Ansatz Teile des Gewindetriebes abgestützt werden. Die zwischen dem Eingangsglied des Spannaggregates und dem Gewindetrieb vorgesehene Zwischenglieder sind in einfacher Weise außermittig angeordnet und können als Zahnwellen oder als ein- oder mehrstufiges Zahnradgetriebe ausgebildet sein, wobei dessen Trägerwellen vorzugsweise in einer Zwischenwand des Gehäuses drehbar zu lagern sind und dessen Zahnräder mit einer das Eingangsglied tragenden auf dem Gehäuse drehbar abgestützten Hohlwelle und der dem Gewindetrieb zugeordneten Hohlwelle unmittelbar trieblich verbunden sein sollten.

Der Gewindetrieb des Spannaggregates sollte aus einer oder mehreren drehbar gelagerten und mit parallel zueinander angeordneten Vorsprüngen versehenen Treibrollen und einer auf der Zugstange angeordneten Gewindespindel gebildet sein und die Treibrollen sollten mit ihren Vorsprüngen in in die Innenmantelfäche der Hohlwelle eingearbeitete Führungsrillen und in Gewinderillen der Gewindespindel eingreifen, derart, dass bei Rotation der Hohlwelle die Gewindespindel über die Treibrollen axial verstellbar ist.

Bei einem mit mehreren Treibrollen versehenen Gewindetrieb ist es angebracht, diese gleichmäßig über den Umfang verteilt anzuordnen und in den Endbereichen beiderseits jeweils in einem Führungskäfig abzustützen.

Die Gewinderillen der Gewindespindel können als ein- oder mehrgängiges, vorzugsweise als zweigängiges Gewinde ausgebildet sein.

Vorteilhaft ist es des Weiteren, dem Spannaggregat und/oder dem diesem zugeordneten Stellglied jeweils eine Sicherungseinrichtung zuzuordnen, mittels denen bei Betriebsstörungen die Zwischenglieder des Spannaggregates und/oder das Stellglied blockierbar sind.

Die Sicherungseinrichtungen können jeweils aus einer in einem gesonderten Gehäuse eingesetzten Magnetspule oder einem durch ein Druckmittel, vorzugsweise durch Druckluft, beaufschlagbaren Verstellkolben und einem durch diesen entgegen der Kraft einer Feder axial verstellbaren an einem Anker angebrachten Sicherungsbolzen bestehen, der unmittelbar oder über Zwischenglieder in an den zugeordneten Bauteilen vorgesehene Ausnehmungen einführbar ist.

Bei einer den Zwischengliedern zugeordneten Sicherungseinrichtung ist es angebracht, deren Sicherungsbolzen auf eine an dem Gehäuse entgegen der Kraft einer Feder axial verschiebbar gelagerten Scheibe einwirken zu lassen, an der ein Rastbolzen angebracht ist, der bei Stromausfall und/oder einer Betriebsstörung in den Übertragungsgliedern der Spanneinrichtung zur Aufrechterhaltung der Spannkraft in dem Kraftspannfutter in eine der in die zugekehrte Stirnfläche eines Zahnrades eingearbeitete Ausnehmungen einführbar ist, wobei den Übertragungsgliedern des Stellgliedes kapazitive Sensoren, optische Sensoren oder Lichtschranken, mittels denen der Betriebszustand der Übertragungsglieder überwachbar ist, zugeordnet sein sollten, die an die den Zwischengliedern zugeordnete Sicherungseinrichtung angeschlossen sind.

Bei einer Sicherungseinrichtung, die einem mit einem umlaufenden Gehäuse zur Aufnahme eines Untersetzungsgetriebes versehenen Stellglied zugeordnet ist, sollte deren Sicherungsbolzen bei Stromausfall zur Aufrechterhaltung der Spannkraft im Kraftspannfutter unmittelbar in eine der in eine der Stirnflächen des Gehäuses eingearbeitete Ausnehmungen selbsttätig einführbar sein.

Bei einer Sicherungseinrichtung, die einem mit umlaufenden Riemenscheiben versehenen Stellglied zugeordnet ist, sollte dagegen der Sicherungsbolzen unmittelbar oder über eine entgegen der Kraft einer Feder axial verschiebbaren umlaufenden Scheibe, die mit einem Raststift versehen ist, mit einer mit Ausnehmungen ausgestatteten Riemenscheibe zusammenwirken.

Angebracht ist es ferner, das Gehäuse auf der dem Kraftspannfutter abgewandten Seite mit einer planen oder gestuften Anlagefläche für eine in die zentrale Bohrung des Gehäuses einzusetzende Anschlagwelle oder ein Führungsrohr auszustatten.

Wird ein Spannaggregat für Werkzeugmaschinen gemäß der Erfindung ausgebildet, so ist es möglich, die Drehbewegungen der Maschinenspindel über das Spannaggregat zu führen und die Verstellbewegungen von unterschiedlich gestalteten elektrischen Spanneinrichtungen mit Hilfe des Spannaggregates in axiale Verstellbewegungen umzuwandeln und unmittelbar auf eine Zugstange zu übertragen. Der Bauaufwand, mittels dem dies zu bewerkstelligen ist, ist sehr gering, vor allem aber ist von Vorteil, dass zur Steuerung keine aufwändigen elektrischen Steuereinrichtungen und Programme zur Verstellung und Anpassung des Kraftspannfutters an unterschiedliche Betriebsbedingungen notwendig sind. Die vorschlagsgemäße Ausgestaltung ermöglicht somit bei einfacher Handhabung über einen langen Zeitraum eine sichere und störungsfreie Betriebsweise sowie einen vielseitigen Einsatz.

Des Weiteren ist sichergestellt, dass bei einem Stromausfall und/oder bei irgendwelchen andersartigen Betriebsstörungen in den Spanneinrichtungen die Zugstange mit Hilfe der Sicherungseinrichtungen sofort blockiert wird. Auch bei einem Nachlauf der Maschinenspindel ist somit eine Minderung der Spannkraft des Kraftspannfutters oder ein Öffnen der Spannbacken ausgeschlossen. Auf diese Weise sind zuverlässig Betriebsunfälle vermeidbar.

In der Zeichnung sind zwei Ausführungsvarianten des gemäß der Erfindung ausgebildeten Spannaggregats für Werkzeugmaschinen dargestellt, das nachfolgend im Einzelnen erläutert ist. Hierbei zeigt:
- Figur 1: das an einer Maschinenspindel einer Werkzeugmaschine angebaute Spannaggregat mit einer elektrischen Spanneinrichtung als Stellglied, in einem Axialschnitt,
- Figur 2: das Spannaggregat nach Figur 1 mit einer andersartigen elektrischen Spanneinrichtung und einem unterschiedlichen Zwischenglied,
- Figur 3: das Spannaggregat mit Spanneinrichtung nach Figur 2, in Seitenansicht, und
- Figur 4: den bei den Spannaggregaten nach den Fig. 1 und 2 verwendeten Gewindetrieb in einer vergrößerten Darstellung und in einem Axialschnitt.

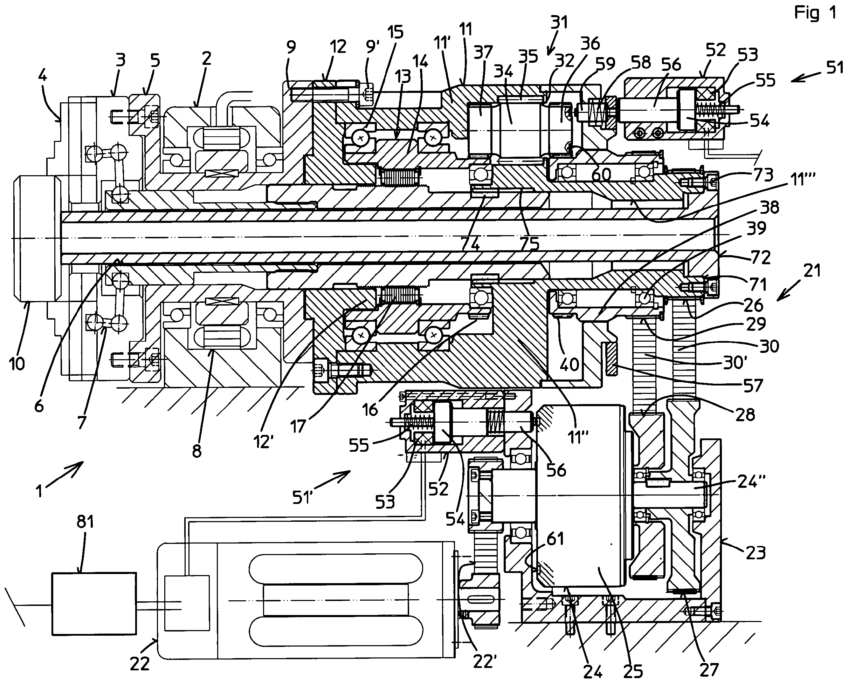

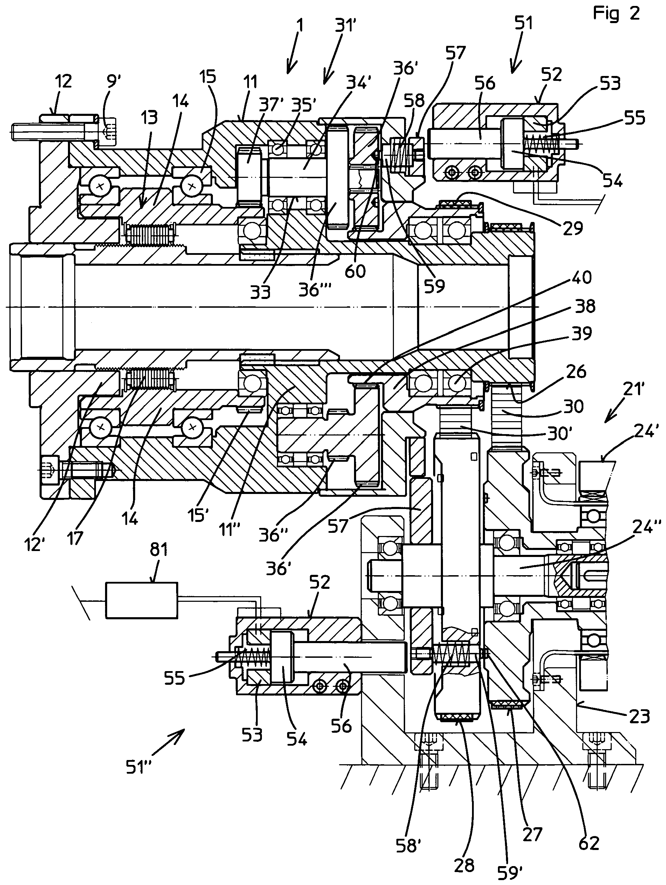

Das in den Figuren 1 und 2 dargestellte und jeweils mit 1 bezeichnete Spannaggregat dient zur Übertragung einer rotierenden Bewegung einer Maschinenspindel 5 einer Werkzeugmaschine 2 auf ein als elektrische Spanneinrichtung ausgebildetes Stellglied 21 bzw. 21' sowie zur Umwandlung der von diesen dem Spannaggregat 1 zugeführten rotatorischen Verstellbewegungen in translatorische Bewegungen, die einem auf der Werkzeugmaschine 2 angeordneten Kraftspannfutter 3, in dem ein Werkstück 10 zur Bearbeitung einzuspannen ist, zuzuführen sind. Das Kraftspannfutter 3 weist dazu radial verstellbare Spannbacken 4 auf, die über Umlenkhebel 7 durch eine axial betätigbare Zugstange 6 verstellbar sind.

Das Spannaggregat 1 besteht hierbei aus einem Gehäuse 11, das mittels Schrauben 9' an einem an der Maschinenspindel 5 vorgesehenen Flansch 9 befestigt ist, und einem Gewindetrieb 13, der über ein Zwischenglied 31 bzw. 31' mit dem Stellglied 21 bzw. 21' sowie der Zugstange 6 in Triebverbindung steht. Das Gehäuse 11, das als abgestufte Hohlwelle bzw. Hohlkörper 11' ausgebildet und durch einen T-förmig ausgestalteten Deckel 12 verschlossen ist, ist über den Flansch 9 fest mit der durch einen Elektromotor 8 antreibbaren Maschinenspindel 5 gekoppelt und läuft mit dieser um. Außerdem ist auf dem Gehäuse 11 in dem dem Flansch 9 gegenüberliegenden Endbereich ein Abtriebsglied in Form einer Riemenscheibe 26 angeordnet, über die die Drehbewegungen der Maschinenspindel 5 dem Stellglied 21 bzw. 21' zugeleitet werden. Über einen Keil 74, der in einer in den Hohlkörper 11' eingearbeiteten Längsnut 75 geführt ist, ist das Gehäuse 11 auch drehfest mit der axial verschiebbaren Zugstange 6 verbunden.

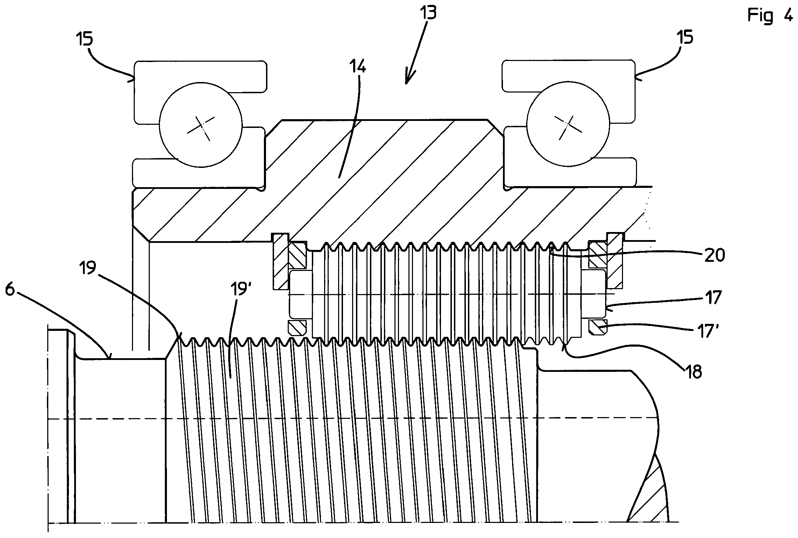

Der Gewindetrieb 13 weist, wie dies im Einzelnen der Figur 4 zu entnehmen ist, eine mittels Lager 15 in dem Gehäuse 11 drehbar und axial unverschiebbar abgestützte Hohlwelle 14 sowie mehrere Treibwellen 17 auf, die in an der Hohlwelle 14 abgestützte Führungskäfige 17' gehalten sind und die in eine auf der Zugstange 6 angeordnete Gewindespindel 19 eingreifen. Mittels parallel zueinander angeordneter Erhöhungen 18, die mit in die Innenmantelfläche der Hohlwelle 14 eingearbeitete Führungsrillen 20 zusammenwirken, ist die Treibrolle 17 mit der Hohlwelle 14 trieblich verbunden. Wird die Hohlwelle 14 angetrieben, so werden die Treibrollen 17 in Rotation versetzt und durch deren Erhöhungen 18, die tangential in ein in die Gewindespindel 19 eingearbeitete Gewinderillen 19' eingreifen, wird diese je nach Drehrichtung der Hohlwelle 14 und der gewählten Steigung der Gewinderillen 19' mehr oder weniger nach rechts oder links verschoben. Durch den in das Gehäuse 11 ragenden Ansatz 12' des Deckels 12 wird der Gewindetrieb 13, insbesondere die Treibrollen 17 mit abgestützt.

Das Stellglied 21 ist mit einem Servomotor 22 ausgestattet, der über einen Riementrieb 22' auf ein in einem Gehäuse 24 eingebautes Getriebe 25 einwirkt. Die Abtriebswelle 24' des Getriebes 24 ist hierbei in einem ortsfest angeordneten Träger 23 gelagert, und auf dieser sind zwei Riemenscheiben 27 und 28 abgestützt, die über Treibriemen 30 und 30' mit Riemenscheiben 26 und 29 zusammenwirken, die an dem Gehäuse 11 bzw. an einer mittels Lager 39 drehbar gelagerten Hohlwelle 38 angebracht sind. Von dem Gehäuse 11 werden somit die Drehbewegungen der Maschinenspindel 5 über die Riemenscheibe 26 als Antriebsglied und den Treibriemen 30 auf die Riemenscheibe 27 übertragen. Die mittels des Servomotors 22 und dem Getriebe 24 in Abhängigkeit von dem jeweils mittels eines Steuergerätes 81 dem Servomotor 22 übermittelten Signale, durch die Verstellbewegungen zur Erhöhung oder Reduzierung der Spannkraft in dem Kraftspannfutter 3 sowie zur Lageänderung der Spannbacken 4 ausgelöst werden, werden dagegen über die Riemenscheiben 28 und 29 als Eingangsglied des Spannaggregates 1 sowie den Treibriemen 30' auf die Hohlwelle 38 übertragen.

Zur Weiterleitung der Verstellbewegungen ist die Hohlwelle 38 mit einer Verzahnung 40 ausgestattet, die gemäß Fig. 1 mit einem Zahnrad 36 der mehrfach vorgesehenen Zwischenglieder 31 zusammenwirkt. Die Zahnräder 36 sind jeweils an einer Welle 34 angearbeitet, die mittels Lager 35 in einer Zwischenwand 11" des Gehäuses 11 außermittig drehbar gelagert sind und ein weiteres Zahnrad 37 tragen, das in eine in die Hohlwelle 14 des Gewindetriebes 13 eingearbeitete Verzahnung 16 eingreift. Die rotorischen Verstellbewegungen des Servomotors 22 werden somit über den Gewindetrieb 13 in axiale Verstellbewegungen der Zugstange 6 umgewandelt.

Bei dem andersartig ausgebildeten Stellglied 21' nach Figur 2 ist der Servomotor, auf dessen Motorwelle 24" die Riemenscheiben 27 und 28 angeordnet sind, nicht dargestellt. Auch ist das Zwischenglied 31' als zweistufiges Untersetzungsgetriebe 33 ausgebildet, dessen Zahnräder 36'" und 37' wiederum auf einer Welle 34' angeordnet sind. Das Zahnrad 36', das mit der Hohlwelle 38 zusammenwirkt, ist über ein weiteres drehbar in der Zwischenwand 11" des Gehäuses 11 gelagerte Zahnrad 36" mit dem Zahnrad 36'" in Triebverbindung. Auf diese Weise ist eine erhebliche Untersetzung der eingeleiteten Rotationsbewegungen zu bewerkstelligen.

Um bei einem Stromausfall und/oder bei irgendwelchen Betriebsstörungen im Bereich des Stellgliedes 21 bzw. 21', beispielsweise bei einem Bruch der Treibriemen 30 und/oder 30', die Spannkraft im Kraftspannfutter 3 aufrechtzuerhalten, so dass bei einem Nachlauf der Maschinenspindel 5 keine Veränderung des Spannzustandes der Spannbacken 4 hervorgerufen werden kann, sind das Spannaggregat 1 sowie die Stellglieder 21 bzw. 21' jeweils mit einer Sicherungseinrichtung 51 bzw. 51' bzw. 51" versehen. Die Sicherungseinrichtungen 51, 51' und 51" bestehen hierbei jeweils im Wesentlichen aus einem ortsfest angeordneten gesonderten Gehäuse 52, in dem eine Magnetspule 53 sowie ein durch diese betätigbarer Anker 54 eingesetzt sind. Der Anker 54 ist entgegen der Kraft einer Druckfeder 55 verstellbar und mit einem Sicherungsbolzen 56 versehen, der unmittelbar oder über Zwischenglieder in Ausnehmungen 60, 61 oder 62 des jeweils zugeordneten Bauteils einführbar ist.

Bei der Sicherungseinrichtung 51 nach Figur 1 wirkt der Sicherungsbolzen 56 auf eine Scheibe 57 ein, die ebenfalls entgegen der Kraft einer Druckfeder 58 verschiebbar auf dem Gehäuse 11 gelagert und an der ein weiterer Bolzen 59 angebracht ist, der in eine der in das Zahnrad 36 eingearbeitete Ausnehmungen 60 einführbar ist. Ist die Magnetspule 53 erregt, wird der Anker 54 durch diese entgegen der Kraft der Feder 55 in der dargestellten Betriebsstellung gehalten. Fällt jedoch der Strom aus und wird keine Magnetkraft mehr auf den Anker 54 ausgeübt, wird durch die Kraft der Feder 55 der Anker 54 sofort nach links verschoben und gegen die Scheibe 57 gedrückt, die, versehen mit dem Bolzen 59, ebenfalls nach links verstellt wird. Dadurch rastet der Bolzen 59 in eine der an dem Zahnrad 36 bzw. 36' vorgesehenen Ausnehmungen 60 ein, das Zwischenglied 31 bzw. 31' und die mit diesem gekoppelten Bauteile, nämlich der Gewindetrieb 13 und die Zugstange 6, sind somit blockiert, so dass eine Lageänderung der Spannbacken 4 des Kraftspannfutters 3 und demnach eine Änderung des Spannzustandes auch bei einem Nachlauf der Maschinenspindel 5 nicht erfolgen kann.

Die Sicherungseinrichtung 51' ist dem Getriebe 24 der Spanneinrichtung 21 zugeordnet und in gleicher Weise aufgebaut. Der Sicherungsbolzen 56 greift hierbei über unmittelbar in eine der in eine Stirnfläche des Gehäuses 25 eingearbeiteten Ausnehmungen 61 ein, so dass auf diese Weise das Stellglied 21 blockiert ist und keine Verstellung der Spannbacken 4 des Kraftspannfutters erfolgen kann.

Die in Figur 2 eingezeichnete Sicherungseinrichtung 51" wirkt, um die Spannung im Kraftspannfutter 3 bei Stromausfall und/oder einer andersartigen Betriebsstörung aufrechtzuerhalten, mit der Riemenscheibe 28 des Stellgliedes 21' zusammen. Durch eine entgegen der Kraft einer Feder 58' axial verschiebbare Scheibe 57', gegen die der Sicherungsbolzen 56' der Sicherungseinrichtung 51" bei Stromausfall gedrückt wird, wird hierbei wiederum entgegen der Kraft der Feder 58' ein Bolzen 59' verstellt, der in eine der an der Riemenscheibe 29 vorgesehenen Ausnehmungen 62 einrasten kann.

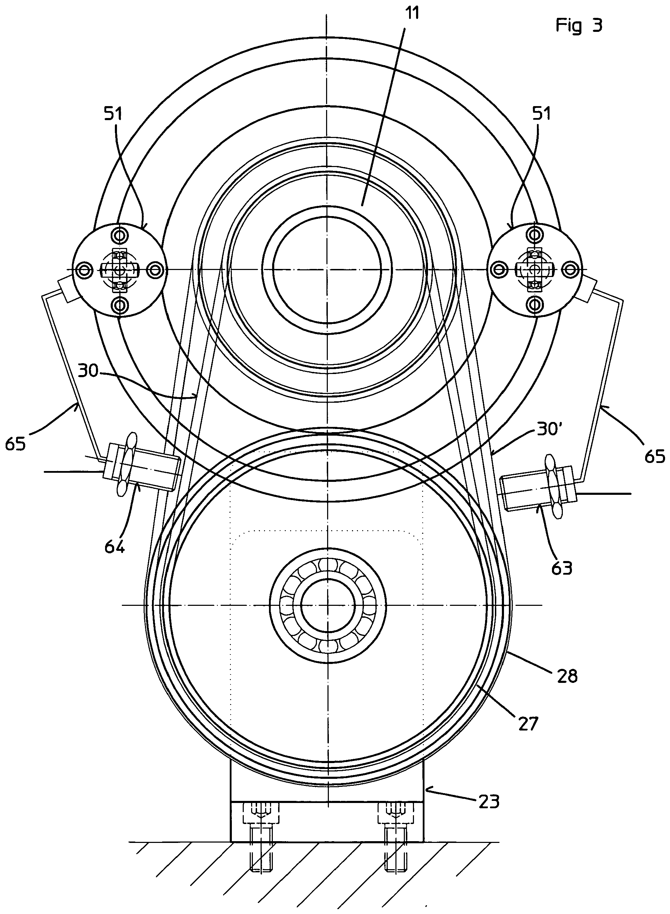

Um den Betriebszustand der Treibriemen 30 und/oder 30' zu überwachen, sind diesen, wie dies der Figur 3 zu entnehmen ist, kapazitive Sensoren 63 bzw. 64 zugeordnet, deren Signale über Signalleitungen 65 der Sicherungseinrichtung 51 zugeleitet werden. Bei einem Bruch der Treibriemen 30 und/oder 30' wird somit das Spannaggregat 1 blockiert, und durch Lösen des Werkstückes 10 in dem Kraftspannfutter 3 bedingte Unfälle werden somit zuverlässig vermieden.

Da das Gehäuse 11 als Hohlkörper 11' ausgebildet ist und somit eine zentrale Bohrung 11"' aufweist, ist es möglich, in dem Gehäuse 11 und der Zugstange 6 eine Anschlagwelle 72 oder ein Führungsrohr bei Stangenbearbeitung anzuordnen. Somit können in dem Kraftspannfutter 3 eingespannte Werkstücke 10 oder das Spannaggregat 1 zugreifende Stangen mittels der Anschlagwelle 72 oder einem Führungsrohr angestützt werden. An dem Hohlkörper 11' ist dazu eine gestufte Anlagefläche 71 angearbeitet, an der die Anschlagwelle 72 anliegt. Mittels Schrauben 73 ist die Anschlagwelle 72 an dem Hohlkörper 11' befestigt.

Selbstverständlich ist es möglich, dem Spannaggregat 1 auch andersartig ausgebildete Stellglieder, z. B. in Form eines Elektromotors, nachzuschalten, um die von die-sen zugeleitete Stellbewegungen in dem Spannaggregat 1 in axiale Verstellbewegungen für die Zugstange 6 umzuwandeln.

## Patentansprüche

1. Spannaggregat (1) für Werkzeugmaschinen (2) mit einem mit einer Maschinenspindel (5) drehfest verbindbaren Gehäuse (11) und einem in diesem angeordneten Gewindetrieb (13), der mit einer mit einem Kraftspannfutter (3) gekoppelten Zugstange (6) zusammenwirkt und mittels dem dem Spannaggregat (1) zugeleitete rotatorische Bewegungen in translatorische Verstellbewegungen der Zugstange (6) umwandelbar sind, wobei das Gehäuse (11) mit einem mit diesem fest verbundenen Abtriebsglied (26), über das die Drehbewegungen der Maschinenspindel (5) auf ein dem Spannaggregat (1) nachgeschaltetes Stellglied (21, 21') übertragbar sind, versehen ist, dem Gehäuse (11) ein vorzugsweise auf diesem drehbar gelagertes Eingangsglied (29) zugeordnet ist, auf das das nachgeschaltete Stellglied (21, 21') einwirkt, und das Eingangsglied (29) über ein oder mehrere Zwischenglieder (31, 31') mit einer drehbar und axial unverschiebbar an dem Gehäuse (11) abgestützten mit dem Gewindetrieb (13) zusammenwirkenden Hohlwelle (14) in Triebverbindung steht,
**dadurch gekennzeichnet,**
**dass** das Gehäuse (11) aus einem gestuft und einstückig ausgebildetem Hohlkörper (11') besteht, der auf der der Maschinenspindel (5) zugekehrten Seite durch einen Deckel (12) verschlossenen ist,
**dass** auf einem auf der dem Deckel (12) gegenüberliegenden Seite des Gehäuses (11) an einer durch eine Abstufung gebildeten Zwischenwand (11") angeformten Endbereich des Hohlkörpers (11') ein Abtriebsglied (26) und das Eingangsglied (29) befestigt bzw. drehbar gelagert sind, und dass in der Zwischenwand (11") die zwischen dem Eingangsglied (29) des Spannaggregates (1) und dem Gewindetrieb (13) vorgesehenen Zwischenglieder (31, 31') außermittig angeordnet sind.

2. Spannaggregat nach Anspruch 1,
**dadurch gekennzeichnet,**
**dass** der Deckel (12) im Querschnitt T-förmig ausgebildet ist und dass durch den in das Gehäuse (11) ragenden Ansatz (12') Teile (17') des Gewindetriebes (13) abgestützt sind.

3. Spannaggregat nach Anspruch 2,
**dadurch gekennzeichnet,**
**dass** durch den Deckel (12) die Hohlwelle (14) in dem Gehäuse (11) vorzugsweise mittels Wälzlager (15) axial arretiert ist.

4. Spannaggregat nach einem oder mehreren der Ansprüche 1 bis 3,
**dadurch gekennzeichnet,**
**dass** die Zwischenglieder (31, 31') als Zahnwellen (32) oder als ein ein- oder mehrstufiges Zahnradgetriebe (33) ausgebildet sind, dessen Trägerwellen (34, 34') in der Zwischenwand (11") des Gehäuses (11) drehbar gelagert sind und dessen Zahnräder (36 bzw. 36') mit einer das Eingangsglied (29) tragenden auf dem Endbereich des Gehäuses (11) drehbar gelagerten Hohlwelle (38) und der dem Gewindetrieb (13) zugeordneten Hohlwelle (14) unmittelbar trieblich verbunden sind.

5. Spannaggregat nach einem oder mehreren der Ansprüche 1 bis 5,
**dadurch gekennzeichnet,**
**dass** der Gewindetrieb (13) des Spannaggregates (1) aus einer oder mehreren drehbar gelagerten und mit parallel zueinander angeordneten Vorsprüngen (18) versehene Treibrollen (17) und einer auf der Zugstange (6) angeordneten Gewindespindel (19) gebildet ist und dass die Treibrollen (17) mit ihren Vorsprüngen (18) in die Innenmantelfläche der Hohlwelle (14) eingearbeitete Führungsrillen (20) und in Gewinderillen (19') der Gewindespindel (19) eingreifen, derart, dass bei Rotation der Hohlwelle (14) die Gewindespindel (19) über die Treibrollen (17) axial verstellbar ist.

6. Spannaggregat nach Anspruch 5,
**dadurch gekennzeichnet,**
**dass** bei einem mit mehreren Treibrollen (17) versehenen Gewindetrieb (13) diese gleichmäßig über den Umfang verteilt angeordnet und in den Endbereichen beiderseits jeweils in einem Führungskäfig (17') abgestützt sind.

7. Spannaggregat nach Anspruch 5 oder 6,
**dadurch gekennzeichnet,**
**dass** die Gewinderillen (19') der Gewindespindel (19) als ein- oder mehrgängiges, vorzugsweise als zweigängiges Gewinde ausgebildet sind.

8. Spannaggregat nach Anspruch 1 bis 7, **dadurch gekennzeichnet,**
**dass** dem Spannaggregat (1) und/oder dem diesem zugeordneten Stellglied (21, 21') jeweils eine Sicherungseinrichtung (51, 51', 51") zugeordnet ist, mittels denen bei Betriebsstörungen die Zwischenglieder (31, 31') des Spannaggregates (1) und/oder das Stellglied (21, 21') blockierbar sind.

9. Spannaggregat nach Anspruch 8,
**dadurch gekennzeichnet,**
**dass** die Sicherungseinrichtungen (51, 51', 51") jeweils aus einer in einem gesonderten Gehäuse (52) eingesetzten Magnetspule (53) und einem Anker (54) oder einem durch ein Druckmittel, vorzugsweise durch Druckluft, beaufschlagbaren Verstellkolben und einem durch diese entgegen der Kraft einer Feder (55) axial verstellbaren an dem Anker (54) angebrachten Sicherungsbolzen (56) bestehen, der unmittelbar oder über Zwischenglieder (57) in an den zugeordneten Bauteilen vorgesehene Ausnehmungen (60, 61, 62) einführbar ist.

10. Spannaggregat nach Anspruch 9,
**dadurch gekennzeichnet,**
**dass** bei einer den Zwischengliedern (31, 31') zugeordneten Sicherungseinrichtung (51) deren Sicherungsbolzen (56) auf eine an dem Gehäuse (11) entgegen der Kraft einer Feder (58) axial verschiebbar gelagerten Scheibe (57) einwirkt, an der ein Rastbolzen (59) angebracht ist, der bei Stromausfall und/oder einer Betriebsstörung in dem Stellglied (21, 21') zur Aufrechterhaltung der Spannkraft in dem Kraftspannfutter (3) in eine der in die zugekehrte Stirnfläche eines Zahnrades (36, 36') eingearbeitete Ausnehmungen (60) einführbar ist.

11. Spannaggregat nach Anspruch 10,
**dadurch gekennzeichnet,**
**dass** den Übertragungsgliedern (30, 30') des Stellgliedes (21') kapazitive Sensoren (63, 64), optische Sensoren oder Lichtschranken, mittels denen der Betriebszustand der Übertragungsglieder (30, 30') überwachbar ist, zugeordnet sind, die an die den Zwischengliedern (31, 31') zugeordnete Sicherungseinrichtung (51) angeschlossen sind.

12. Spannaggregat nach Anspruch 8,
**dadurch gekennzeichnet,**
**dass** bei einer Sicherungseinrichtung (51'), die einem mit einem umlaufenden Gehäuse (25) zur Aufnahme eines Untersetzungsgetriebes (24) versehenen Stellglied (21) zugeordnet ist, deren Sicherungsbolzen (56) bei Stromausfall zur Auftrechterhaltung der Spannkraft im Kraftspannfutter (3) unmittelbar in eine der in eine der Stirnflächen des Getriebegehäuses (25) eingearbeitete Ausnehmungen (61) selbsttätig einführbar ist.

13. Spannaggregat nach Anspruch 8,
**dadurch gekennzeichnet,**
**dass** bei einer Sicherungseinrichtung (51"), die mit einem mit umlaufenden Riemenscheiben (26, 27 bzw. 28, 29) versehenen Stellglied (21') zugeordnet ist, der Sicherungsbolzen (56') unmittelbar oder über eine entgegen der Kraft einer Feder (58') in axial verschiebbaren umlaufenden Scheibe (57'), die mit einem Raststift (59') versehen ist, mit einer mit Ausnehmungen (62) ausgestatteten Riemenscheibe (27) zusammenwirkt.

14. Spannaggregat nach einem oder mehreren der Ansprüche 1 bis 13,
**dadurch gekennzeichnet,**
**dass** das Gehäuse (11) auf der dem Kraftspannfutter (3) abgewandten Seite mit einer planen oder gestuften Anlagefläche (71) für ein in eine zentrale Bohrung des Gehäuses (11) einzusetzende Anschlagwelle (72) oder ein Führungsrohr versehen ist.

## Claims

1. Clamping unit (1) for tool machines (2) having a housing (11) which can be connected to a machine spindle (5) to be resistant to rotation and a screw drive (13) arranged in the housing (11) and which cooperates with a connecting rod (6) coupled to a heavy-duty chuck (3) and by means of which rotatory movements supplied to the clamping unit (1) can be converted to translatory adjusting movements of the connecting rod (6), wherein the housing (11) is provided with a driving element (26) firmly connected to the latter, by means of which the rotary movements of the machine spindle (5) can be transferred to an actuator (21, 21') downstream of the clamping unit (1), an input element (29) preferably mounted to be rotatable on the housing (11) is assigned to the latter, on which input element (29) the downstream actuator (21, 21') acts, and the input element (29) is in driving connection via one or more intermediate elements (31, 31') with a hollow shaft (14) cooperating with the screw drive (13) and supported to be rotatable and axially non-displaceable on the housing (11), **characterised in that** the housing (11) consists of a hollow body (11') designed to be stepped and in one piece and which is closed by a cover (12) on the side facing the machine spindle (5), **in that** a driving element (26) and the input element (29) are attached or mounted to be rotatable on an end region of the hollow body (11') integrally moulded on an intermediate wall (11") formed by a graduation on the side of the housing (11) opposite the cover (12), and **in that** in the intermediate wall (11"), the intermediate elements (31, 31') provided between the input element (29) of the clamping unit (1) and the screw drive (13) are arranged off-centre.

2. Clamping unit according to claim 1, **characterised in that** the cover (12) is designed to be T-shaped in cross-section and **in that** parts (17') of the screw drive (13) are supported by the shoulder (12') projecting into the housing (11).

3. Clamping unit according to claim 2, **characterised in that** due to the cover (12), the hollow shaft (14) in the housing (11) is locked axially preferably by means of antifriction bearings (15).

4. Clamping unit according to one or more of claims 1 to 3, **characterised in that** the intermediate elements (31, 31') are designed as serrated shafts (32) or as a singlestage or multi-stage gear drive (33), the load-bearing shafts (34, 34') of which are mounted to be rotatable in the intermediate wall (11") of the housing (11) and the gearwheels (36 or 36') of which are connected to be directly drivable with a hollow shaft (38) mounted to be rotatable on the end region of the housing (11) and supporting the input element (29) and the hollow shaft (14) assigned to the screw drive (13).

5. Clamping unit according to one or more of claims 1 to 5, **characterised in that** the screw drive (13) of the clamping unit (1) is formed from one or more rotatably mounted drive rollers (17) provided with projections (18) arranged to be parallel to one another and a threaded spindle (19) arranged on the connecting rod (6) and **in that** the drive rollers (17) with their projections (18) engage in guide grooves (20) incorporated in the inner shell surface of the hollow shaft (14) and in threaded grooves (19') of the threaded spindle (19) such that on rotation of the hollow shaft (14), the threaded spindle (19) can be axially adjusted via the drive rollers (17).

6. Clamping unit according to claim 5, characterised that in a screw drive (13) provided with several drive rollers (17), they are arranged distributed uniformly over the periphery and are supported in the end regions on both sides respectively in a guide cage (17').

7. Clamping unit according to claim 5 or 6, **characterised in that** the threaded grooves (19') of the threaded spindle (19) are designed as a single-flight or a multi-flight, preferably as a double-flight thread.

8. Clamping unit according to claim 1 to 7, **characterised in that** respectively one securing device (51, 51', 51") is assigned to the clamping unit (1) and/or the actuator (21, 21') assigned to the latter, by means of which securing device (51, 51', 51") for operational disturbances, the intermediate elements (31, 31') of the clamping unit (1) and/or the actuator (21, 21') can be blocked.

9. Clamping unit according to claim 8, **characterised in that** the securing devices (51, 51', 51") consist respectively of a magnetic coil (53) inserted in a separate housing (52) and an anchor (54) or an adjusting piston exposed to a compressed agent, preferably to compressed air, and a securing bolt (56) attached to the anchor (54) to be axially adjustable due to the latter counter to the force of a spring (55) which securing bolt (56) can be introduced directly or via intermediate elements (57) into recesses (60, 61, 62) provided on the assigned components.

10. Clamping unit according to claim 9, **characterised in that** in a securing device (51) assigned to the intermediate elements (31, 31'), the securing bolt (56) of which acts on a disc (57) mounted to be axially displaceable on the housing (11) counter to the force of a spring (58), on which disc (57) is attached a locking bolt (59) which can be introduced into one of the recesses (60) incorporated in the facing end-face surface of a gearwheel (36, 36') when the power fails and/or there is an operational disturbance in the actuator (21, 21') to maintain the clamping force in the heavy-duty chuck (3).

11. Clamping unit according to claim 10, **characterised in that** capacitive sensors (63, 64), optical sensors or light barriers, by means of which the operational state of the transfer elements (30, 30') can be monitored, are assigned to the transfer elements (30, 30') of the actuator (21'), and which are connected to the securing device (51) assigned to the intermediate elements (31, 31').

12. Clamping unit according to claim 8, **characterised in that** in a securing device (51'), which is assigned to an actuator (21) provided with a circular housing (25) to receive a reducing gear (24), the securing bolt (56) of which actuator (21) can be introduced automatically directly into one of the recesses (61) incorporated in one of the end-face surfaces of the gear housing (25) when the power fails, to maintain the clamping force in the heavy-duty chuck (3).

13. Clamping unit according to claim 8, **characterised in that** in a securing device (51"), which is assigned to an actuator (21') provided with circular strap discs (26, 27 or 28, 29), the securing bolt (56') cooperates directly or via a circular disc (57') to be axially displaceable counter to the force of a spring (58') and which is provided with a locking pin (59'), with a strap disc (27) provided with recesses (62).

14. Clamping unit according to one or more of claims 1 to 13, **characterised in that** the housing (11) is provided on the side facing away from the heavy-duty chuck (3) with a flat or stepped support surface (71) for a stop shaft (72) or a guide tube to be inserted in a central bore of the housing (11).

## Revendications

1. Agrégat de serrage (1) pour machines-outils (2) avec un carter (11) apte à être relié fixe en rotation à une broche de machine (5), et avec une commande filetée (13) disposée sur ledit carter (11) et coopérant avec une barre de traction (6) accouplée à un mandrin (3) à l'aide duquel des mouvements rotatifs transmis à l'agrégat de serrage (1) sont aptes à être transformés en mouvements de réglage en translation de la barre de traction (6), le carter (11) étant pourvu d'un organe de sortie (26) qui lui est relié de manière fixe et par l'intermédiaire duquel les mouvements rotatifs de la broche de machine (5) sont aptes à être transmis à un vérin (21, 21') monté en aval de l'agrégat de serrage (1), un organe d'entrée (29) qui est monté de préférence en rotation sur le carter (11) et sur lequel agit le vérin (21, 21') monté en aval étant associé audit carter (11), et l'organe d'entrée (29) étant en relation d'entraînement, par l'intermédiaire d'un ou plusieurs organes intermédiaires (31, 31'), avec un arbre creux (14) qui est en appui en rotation et fixe axialement sur le carter (11) et qui coopère avec la commande filetée (13),
**caractérisé en ce que** le carter (11) se compose d'un arbre creux (11') étagé et d'une seule pièce qui est fermé par un couvercle (12) sur son côté tourné vers la broche de machine (5),
**en ce qu'**un organe de sortie (26) et l'organe d'entrée (29) sont fixés et montés en rotation sur une zone d'extrémité du corps creux (11') qui est rapportée, sur le côté du carter (11) opposé au couvercle (12), sur une paroi intermédiaire (11") formée par un épaulement,
et **en ce que** dans la paroi intermédiaire (11"), les organes intermédiaires (31, 31') prévus entre l'organe d'entrée (29) de l'agrégat de serrage (1) et la commande filetée (13) sont excentrés.

2. Agrégat de serrage selon la revendication 1, **caractérisé en ce que** le couvercle (12) présente une section transversale en T, et **en ce que** grâce à la saillie (12') qui dépasse dans le carter (11), des parties (17') de la commande filetée (13) sont en appui.

3. Agrégat de serrage selon la revendication 2, **caractérisé en ce que** grâce au couvercle (12), l'arbre creux (14) est arrêté axialement dans le carter (11), de préférence à l'aide de paliers à roulement (15).

4. Agrégat de serrage selon l'une au moins des revendications 1 à 3, **caractérisé en ce que** les organes intermédiaires (31, 31') sont conçus comme des arbres cannelés (32) ou comme un engrenage à un ou plusieurs niveaux (33) dont les arbres porteurs (34, 34') sont montés en rotation dans la paroi intermédiaire (11") du carter (11) et dont les roues dentées (34, 36') sont en relation d'entraînement directe avec un arbre creux (38) qui porte l'organe d'entrée (39) et qui est monté en rotation sur la zone d'extrémité du carter (11), et avec l'arbre creux (14) associé à la commande filetée (13).

5. Agrégat de serrage selon l'une au moins des revendications 1 à 5, **caractérisé en ce que** la commande filetée (13) de l'agrégat de serrage (1) est formée par un ou plusieurs rouleaux d'entraînement (17) qui sont montés en rotation et qui sont pourvus de saillies (18) parallèles les unes aux autres, et par une broche filetée (19) qui est disposée sur la barre de traction (6), et **en ce que** les rouleaux d'entraînement (17), avec leurs saillies (18), viennent en prise dans des rainures de guidage (20) réalisées dans la surface intérieure de l'arbre creux (14) et dans des rainures filetées (19') de la broche filetée (19), de telle sorte que lors de la rotation de l'arbre creux (14), ladite broche filetée (19) est réglable axialement par l'intermédiaire des rouleaux d'entraînement (17) .

6. Agrégat de serrage selon la revendication 5, **caractérisé en ce que** dans le cas d'une commande filetée (13) pourvue de plusieurs rouleaux d'entraînement (17), ceux-ci sont répartis régulièrement sur la circonférence et sont en appui dans les zones d'extrémité, des deux côtés, dans une cage de guidage (17') respective.

7. Agrégat de serrage selon la revendication 5 ou 6, **caractérisé en ce que** les rainures filetées (19') de la broche filetée (19) sont conçues comme un filetage à filet unique ou multiple, de préférence double.

8. Agrégat de serrage selon les revendications 1 à 7, **caractérisé en ce qu'**il est prévu, associé à l'agrégat de serrage (1) et/ou au vérin (21, 21') associé à celui-ci, un dispositif de sécurité (51, 51', 51") respectif à l'aide duquel les organes intermédiaires (31, 31') de l'agrégat de serrage (1) et/ou le vérin (21, 21') peuvent être bloqués en cas de dysfonctionnements.

9. Agrégat de serrage selon la revendication 8, **caractérisé en ce que** les dispositifs de sécurité (51, 51', 51") se composent chacun d'une bobine d'électro-aimant (53) qui est placée dans un carter séparé (52), d'un induit (54) ou d'un piston de réglage qui est apte à être contraint par un agent de pression, de préférence de l'air comprimé, et d'une goupille de sécurité (56) qui est installée sur l'induit (54) en étant mobile axialement grâce à cet air comprimé à l'encontre de la force d'un ressort (55) et qui est apte à être introduite directement ou par l'intermédiaire d'organes intermédiaires (57) dans des creux (60, 61, 62) prévus sur les éléments associés.

10. Agrégat de serrage selon la revendication 9, **caractérisé en ce qu'**avec un dispositif de sécurité (51) associé aux organes intermédiaires (31, 31'), la goupille de sécurité (56) de ce dispositif de sécurité (51) agit sur un disque (57) qui est monté, axialement mobile à l'encontre de la force d'un ressort (58), sur le carter (11) et sur lequel est montée une goupille d'arrêt (59) qui, en cas de panne de courant et/ou de dysfonctionnement dans le vérin (21, 21'), est apte à être introduite, pour maintenir la force de serrage dans le mandrin (3), dans l'un des creux (60) ménagés dans la surface frontale, tournée vers ladite goupille (59), d'une roue dentée (36, 36').

11. Agrégat de serrage selon la revendication 10, **caractérisé en ce qu'**il est prévu, associés aux organes de transmission (30, 30') du vérin (21'), des capteurs capacitifs (63, 64), des capteurs optiques ou des barrières lumineuses à l'aide desquels l'état de fonctionnement des organes de transmission (30, 30') peut être surveillé et qui sont raccordés au dispositif de sécurité (51) associé aux organes intermédiaires (31, 31').

12. Agrégat de serrage selon la revendication 8, **caractérisé en ce qu'**avec un dispositif de sécurité (51') qui est associé à un vérin (21) pourvu d'un carter périphérique (25) pour loger un démultiplicateur (24), en cas de panne de courant la goupille de sécurité (56) dudit dispositif de sécurité (51'), pour maintenir la force de serrage dans le mandrin (3), est apte à être introduite automatiquement directement dans l'un des creux (61) ménagés dans l'une des surfaces frontales du carter de démultiplicateur (25).

13. Agrégat de serrage selon la revendication 8, **caractérisé en ce qu'**avec un dispositif de sécurité (51") qui est associé à un vérin (21') pourvu de poulies périphériques (26, 27 et 28, 29), la goupille de sécurité (56') coopère, directement ou par l'intermédiaire d'un disque périphérique (57') qui est axialement mobile à l'encontre de la force d'un ressort (58') et qui est pourvu d'une goupille d'arrêt (59), avec une poulie (27) dotée de creux (62).

14. Agrégat de serrage selon l'une au moins des revendications 1 à 13, **caractérisé en ce que** le carter (11), sur le côté opposé au mandrin (3), est pourvu d'une surface d'application (71) plane ou étagée pour un arbre de butée (75) à placer dans un perçage central dudit carter (11), ou pour un tube de guidage.
